Europäisches Patentamt

European Patent Office

Office européen des brevets

(19)

(11) Numéro de publication: **0 043 773**
**A1**

(12) **DEMANDE DE BREVET EUROPEEN**

(21) Numéro de dépôt: 81401080.7

(22) Date de dépôt: **06.07.81**

(51) Int. Cl.³: **A 47 J 43/046,** B 02 C 18/12

(30) Priorité: **08.07.80 FR 8015125**

(43) Date de publication de la demande: **13.01.82**
**Bulletin 82/2**

(84) Etats contractants désignés: **AT BE CH DE FR GB IT LI LU NL SE**

(71) Demandeur: **ROBOT-COUPE, 82-84 Boulevard des Batignolles, F-75017 Paris (FR)**

(72) Inventeur: **Meyer, Jean, 8 Rue des Fossettes, F-14128 Cormelles le Royal (FR)**

(74) Mandataire: **Viard, Jean, Cabinet VIARD 10 Rue de la Source, F-75016 Paris (FR)**

(54) **Apparell pour la préparation d'aliments, notamment pour le travail de pâtes.**

(57) Appareil du type mélangeur à usage ménager, comprenant un bol assujetti amoviblement sur un socle, un outil rotatif intérieur au bol étant entraîné par un moteur disposé dans le socle.

Selon l'invention, le bol 3 est fermé par un couvercle (2) bombé, l'outil (1) comprenant un moyeu (14) coopérant avec l'arbre moteur (5) et deux ailes (11, 12) dont la longueur est notablement inférieure au rayon du bol (3).

EP 0 043 773 A1

La présente invention a pour objet un appareil de préparation d'aliments du type mélangeur ou "mixer",destiné en particulier à la préparation de pâtes, telles que celles qui sont utilisées en patisserie.

Un appareil de ce type est connu par le Brevet Français N° 71 27039 au nom de Pierre Verdun. Dans ce brevet est décrit un appareil à usage ménager, comportant plusieurs outils interchangeables. Ces outils sont montés sur l'arbre d'un moteur, dont le bloc forme socle pour le bol ou cuve de travail, dans le fond duquel fait saillie l'arbre de sortie du moteur. Cet arbre de sortie est entouré par une jupe formant chicane,placée dans le fond du bol. Lorsque l'outil utilisé est constitué par deux lames de couteau s'étendant radialement à partir d'un moyeu, le moyeu est formé de deux parties cylindriques solidarisées à leur sommet qui viennent entourer ladite jupe pour assurer l'étanchéité.

Dans ce brevet, le bol est fixé d'une manière amovible sur le socle et est surmonté par un couvercle plat portant des moyens pour une mise en route automatique. Des couteaux rotatifs peuvent servir non seulement à couper les viandes et légumes, mais peuvent également être utilisés pour travailler une pâte à gateau telle qu'une pâte brisée. Ce résultat est dû au fait que, outre leur action de coupe, les deux couteaux superposés produisent une agitation rapide des produits coupés.Cette agitation provient de la réaction de la surface interne du bol à l'encontre de la force centrifuge exercée sur le produit par la rotation des lames. C'est ainsi que l'on observe, dans le cas d'un mélange poudre-liquide, la formation d'un tore animé d'un double mouvement de rotation,d'une part autour de l'axe de l'appareil et, d'autre part autour de l'axe de sa section.Au bout de quelques secondes, le mélange prend une consistance pateuse et il se forme une boule de pâte.

Les couteaux assurent ainsi une double fonction de coupe et de mélange. La présente invention repose sur l'idée

2

que le mode de fonctionnement d'un tel appareil en ce qui concerne le travail de pâtes peut être considérablement amélioré en dissociant la fonction de coupe et la fonction de mélange d'une part et en donnant au récipient une forme plus appropriée.

Selon la présente invention, l'appareil pour la préparation d'aliments, du type comprenant un bol monté sur un socle et fermé par un couvercle amovible, un couteau présentant deux lames disposées radialement dans des plans horizontaux parallèles étant monté sur un arbre.moteur, est caractérisé en ce que ledit couvercle présente une forme bombée. On a constaté que, d'une manière surprenante, cette caractéristique permettait non seulement de donner au mélange un parcours avantageux à l'intérieur du récipient (bol et couvercle),ce qui améliore le processus de mélange, mais encore que la capacité de travail était accrue d'une capacité supérieure à celle que l'on pouvait attendre de la seule augmentation de volume résultant de la forme du couvercle.

Selon une autre caractéristique de l'invention, l'outil de travail est constitué par un moyeu comprenant deux parties cylindriques réunies par leur extrêmité supérieure,deux ailes en forme de croissant s'étendant dans deux plans perpendiculaires à l'axe du moyeu, l'une des deux ailes étant sensiblement dans le plan inférieur de l'outil, la dimension hors-tout dudit outil étant plus petite que le diamètre du bol cylindrique.Alors que dans l'appareil connu les lames du couteau devaient affleurer les parois internes du bol pour assurer une coupe fine de la matière, la seule fonction de l'outil selon la présente invention étant celle d'assurer un mélange intime entre au moins un produit en poudre et au moins un produit à l'état liquide, il n'est pas nécessaire que les extrêmités des ailes arrivent au voisinage de la paroi du bol.Il est même souhaitable qu'il existe un certain espace permettant une bonne circulation dú produit entre l'outil et le bol. De plus,le moment appliqué sur l'arbre moteur est inférieur au moment des forces appliquées sur ledit arbre avec un couteau à grandes lames.

3

D'autres caractéristiques et avantages de l'invention apparaîtront au cours de la description qui va suivre d'un mode particulier de réalisation,donné uniquement à titre d'exemple non limitatif, en regard des figures qui représentent :

- la Fig.1, un outil selon l'invention;
- la Fig.2, un appareil à l'intérieur duquel est monté un outil de mélange,en coupe par un plan vertical.

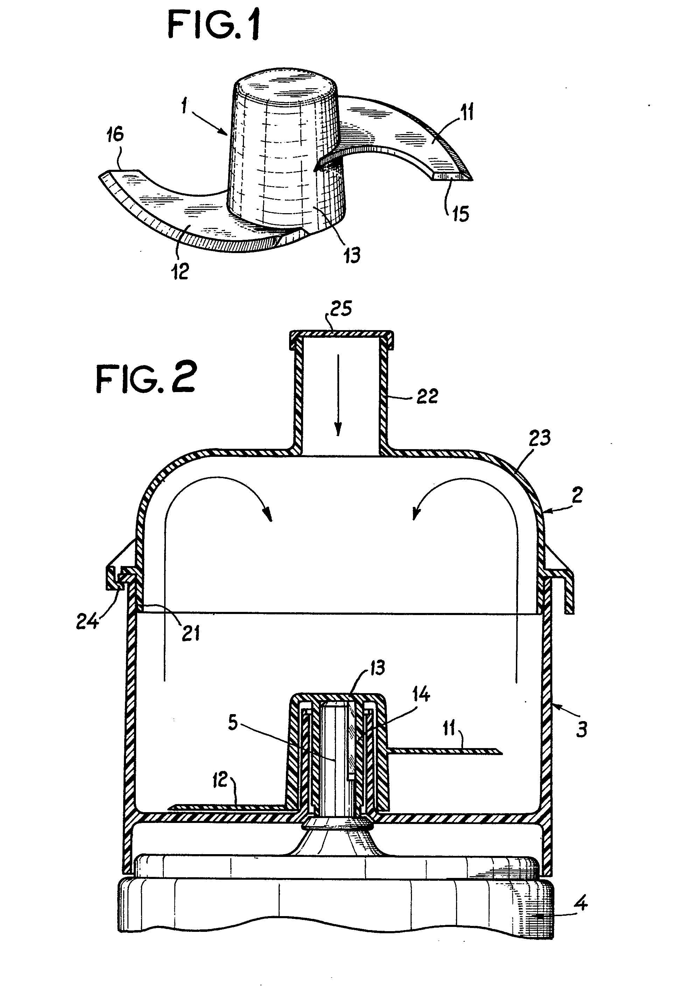

Sur la Fig.1, l'outil désigné d'une manière générale par la référence 1, comprend deux ailes 11 et 12, disposées dans des plans horizontaux parallèles lorsque l'outil est en position d'utilisation.Cet outil est avantageusement réalisé par moulage d'une matière plastique telle que de l' A.B.S. , par exemple. Les ailes 11 et 12, affectent une forme en croissant à face convexe extérieure et font saillie à partir du moyeu 13.Les extrêmités des ailes 11 et 12 sont constituées par des pans coupés 15 et 16.Les bords avant des ailes sont chanfreinés pour faciliter le mouvement de la matière vers le haut de l'appareil.

On retrouve sur la Fig.2 les éléments qui viennent d'être décrits et,en particulier, les ailes 11 et 12, et le moyeu 13. La partie cylindrique interne 14 présente un bossage interne qui, par coopération avec un méplat de l'arbre moteur 5, assure l'entrainement sans glissement de l'outil.Le bloc moteur 4 constitue le socle du bol 3.Le bol 3 est fermé par un couvercle 2. La jupe cylindrique inférieure 21 du couvercle 2 pénètre à l'intérieur du bol 3 afin d'assurer l'étanchéité nécessaire.Les parois verticale et horizontale du couvercle 2 sont raccordées par une surface torique 23 qui donne au couvercle une forme générale bombée.Une goulotte centrale 22,permet l'introduction d'un ingrédient au cours du travail de la pâte. Afin d'éviter les projections de liquide au début du travail la goulotte 22 peut être obturée par un couvercle 25.Le couvercle 2 peut être assujetti sur le bol 3 au moyen de taquets 24,comme décrit dans le brevet précité ou par tout autre moyen convenable.

4

Dans le cas du travail des pâtes, il s'agit dans un premier temps de réaliser le mélange des ingrédients, puis leur pétrissage. Le pétrissage implique l'exercice d'une pression sur le mélange de manière à réaliser un contact intime entre le liquide et la poudre, c'est-à-dire, habituellement entre l'eau et la farine. Le fonctionnement de l'appareil est le suivant : la majeure partie des ingrédients ayant été introduite dans le bol, le couvercle est fermé et le moteur entraîne l'outil 1 à une vitesse de plusieurs centaines de tours par minute et, par exemple, à 1.500 t/mn. Les constituants sont entraînés par la force centrifuge vers la paroi du bol 3 et sont pressés contre ladite paroi. Ils subissent ensuite la pression des couches suivantes ce qui provoque leur montée le long de ladite paroi. Simultanément, la rotation de l'outil 1 provoque la formation d'un cône à sommet tourné vers l'outil. Après montée le long de la paroi, le mélange est ramené par gravité vers l'outil qui le travaille à nouveau.Cette succession de mouvements provoque l'homogénéisation du mélange et la formation de la pâte qui constitue rapidement une boule. L'espace libre entre les extrêmités des ailes de l'outil 1 et la paroi interne du bol 3 peut varier entre 10% et 30% du diamètre interne du bol. C'est-à-dire que pour un bol de diamètre interne de 160 mm environ, l'espace libre peut varier entre 10mm. et 25,4 mm. de chaque côté de l'outil.

La forme bombée du couvercle 2 permet, d'une part un retour guidé du mélange, puis de la pâte, vers le centre de l'appareil et, d'autre part permet à la balle de tourner à l'intérieur du réceptacle constitué par le couvercle 2 et le bol 3 après sa formation, durant le pétrissage proprement dit, sans que l'écrasement et la friction de la balle ne conduisent le moteur à des efforts prohibitifs. Ainsi, la capacité de travail de l'appareil est accrue d'environ 50%. Des résultats excellents ont été obtenus avec les dimensions suivantes : Diamètre du bol 165 mm; dimensions de l'outil hors-tout 140 mm.; hauteur du bol 95mm.; hauteur du couvercle 70mm.; rayon de courbure du couvercle 25mm.;distance entre les ailes 22mm.; vitesse de rotation de l'outil 1.500 t/mn.

0043773

5

Revendications

1. Appareil de préparation d'aliments, notamment pour le travail de pâtes, comprenant un bol monté sur un socle renfermant un moteur électrique, ledit bol étant fermé par un couvercle amovible et renfermant un outil rotatif actionné par le moteur et entraînant les produits à travailler, caractérisé en ce que le couvercle (2) présente une forme bombée dont la concavité est orientée vers l'intérieur du bol (3), l'outil rotatif (1) comprenant un moyeu(14) à partir duquel s'étendent au moins deux ailes ( 11,12 ) dans des plans sensiblement perpendiculaires à l'axe du moyeu, l'une des ailes (12) étant , après montage au voisinage du fond du bol (3), la dimension hors-tout dudit outil (1) étant notablement inférieure au diamètre interne du bol (3).

2. Appareil selon la revendication 1, caractérisé en ce que les ailes (11,12) ont une forme en croissant dont la convexité est orientée dans le sens de rotation de l'outil (1).

3. Appareil selon l'une des revendications 1 ou 2, caractérisé en ce que le bord avant des ailes (11,12) présentent un chanfrein de manière à diriger les produits vers le haut de l'appareil.

4. Appareil selon la revendication 1, caractérisé en ce que le bol(3)est monté d'une manière amovible sur le socle (4), le moyeu (14) de l'outil (1) étant glissé sur l'arbre de sortie du moteur.

5. Appareil selon la revendication 1, caractérisé en ce que le couvercle (2) présente une paroi latérale cylindrique et une paroi supérieure réunies par une surface torique (23).

6. Appareil selon la revendication 2, caractérisé en ce que les ailes (11,12) de l'outil (1) sont terminées par des pans coupés (15,16).

7. Appareil selon la revendication 1, caractérisé en ce que l'espace libre entre la paroi interne latérale du bol (3)

et les extrêmités des ailes (11,12) de l'outil (1) est compris entre 10% et 30% du diamètre interne du bol (3), de chaque côté de l'outil.

8. Appareil selon la revendication 2, caractérisé en ce que l'outil(1)est monobloc.

9. Appareil selon la revendication 2, caractérisé en ce que le moyeu de l'outil (1) comporte deux jupes entourant une cheminée verticale faisant saillie à partir du fond du bol (3) pour assurer l'étanchéité, les deux jupes étant réunies par un couvercle (13).

10. Appareil selon l'une quelconque des revendications précédentes, caractérisé en ce que l'outil (1) est entraîné par le moteur à une vitesse de rotation de plusieurs centaines de tours par minute.

1/1

## FIG.1

## FIG.2

## DOCUMENTS CONSIDERES COMME PERTINENTS

| Catégorie | Citation du document avec indication, en cas de besoin, des parties pertinentes | Revendication concernée |
|---|---|---|
| | <u>AU - B - 406 697</u> (NEWCASTLE BUTCHERS) <br> * En entier * <br><br> -- | 1,2,3, 5,6,7 |
| | <u>BE - A - 536 573</u> (LIBEERT) <br> * En entier * <br><br> -- | 1,2,3, 5 |
| | <u>FR - A - 1 153 006</u> (DUPONT) <br> * Figures 1,2 * <br><br> --- | 1,2 |
| | <u>CH - A - 480 054</u> (KNEUBUEHLER) <br> * En entier * <br><br> -- | 1,2,3, 4 |
| | <u>US - A - 4 200 244</u> (SONTHEIMER) <br> * Figures 1,2 * <br><br> -- | 1,2,3, 4,9 |
| | <u>FR - A - 2 422 373</u> (MOULINEX S.A.) <br> * Figures 1,2 * <br><br> -- | 1,2,3, 4 |
| | <u>US - A - 4 173 310</u> (SCHAEFFER) <br> * Figure 2 * <br><br> -- | 1,2,3, 6 |
| | <u>FR - A - 1 444 849</u> (MOULINEX S.A.) <br> * Figures 1,2 * <br><br> -- <br><br> ./. | 1,2,3, 4 |

**CLASSEMENT DE LA DEMANDE (Int. Cl.³)**

A 47 J 43/046
B 02 C 18/12

**DOMAINES TECHNIQUES RECHERCHES (Int. Cl.³)**

A 47 J
B 02 C

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 08-10-1981 | SCHARTZ |

OEB Form 1503.1  06.78

**Office européen
des brevets**

**RAPPORT DE RECHERCHE EUROPEENNE**

| **DOCUMENTS CONSIDERES COMME PERTINENTS** | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 409 033 (ROBOT-COUPE S.A.)<br><br>  * Revendication 3 *<br><br>      -- | 8 | |
| | US - A - 3 606 178 (KLOPP)<br>  * Figures 2,4 *<br><br>      -- | 1,5 | |
| D | FR - A - 2 147 361 (VERDUN)<br>  * Figure 2 *<br><br>      ---- | 4,9 | |
| | | | **DOMAINES TECHNIQUES RECHERCHES (Int. Cl. 3)** |

OEB Form 1503.2  06.78